# EUROPEAN PATENT SPECIFICATION

(11) **EP 4 324 126 B1**
(45) Date of publication and mention of the grant of the patent: **15.04.2026**
(21) Application number: 21720846.1
(22) Date of filing: 15.04.2021
(51) Int. Cl.: H04L 61/2575

(54) **SECURE MULTICLOUD CONNECTIVITY FOR CLOUD-NATIVE APPLICATIONS**
SICHERE MULTICLOUD KONNEKTIVITÄT FÜR NATIVE CLOUD ANWENDUNGEN
CONNECTIVITÉ MULTI NUAGES POUR DES APPLICATIONS NUAGES NATIVES.

(43) Date of publication of application: 21.02.2024
(73) Proprietor: Telefonaktiebolaget LM Ericsson (publ), 164 83 Stockholm (SE)
(72) Inventor: KOMU, Miika, 00330 Helsinki (FI); SALMELA, Patrik, 02230 Espoo (FI); KAUPPINEN, Tero, 02320 Espoo (FI)
(74) Representative: Ericsson
(86) International application number: PCT/IB2021/053134
(87) International publication number: WO 2022/219375

(56) References cited:
- WO-A1-2020/251828
- US-A1- 2017 214 550
- US-A1- 2020 112 487
- BUZACHIS ALINA ET AL: "Towards Osmotic Computing: Analyzing Overlay Network Solutions to Optimize the Deployment of Container-Based Microservices in Fog, Edge and IoT Environments", 2018 IEEE 2ND INTERNATIONAL CONFERENCE ON FOG AND EDGE COMPUTING (ICFEC), IEEE, 1 May 2018 (2018-05-01), pages 1 - 10, XP033339850, [retrieved on 20180511], DOI: 10.1109/CFEC.2018.8358729
- ROSENBERG JDROSEN NET J: "Interactive Connectivity Establishment (ICE): A Protocol for Network Address Translator (NAT) Traversal for Offer/Answer Protocols; rfc5245.txt", INTERACTIVE CONNECTIVITY ESTABLISHMENT (ICE): A PROTOCOL FOR NETWORK ADDRESS TRANSLATOR (NAT) TRAVERSAL FOR OFFER/ANSWER PROTOCOLS; RFC5245.TXT, INTERNET ENGINEERING TASK FORCE, IETF; STANDARD, INTERNET SOCIETY (ISOC) 4, RUE DES FALAISES CH- 1205 GEN, 30 April 2010 (2010-04-30), pages 1 - 117, XP015070785
- ANONYMOUS: "5G and the Cloud - A 5G Americas White Paper", 31 December 2019 (2019-12-31), pages 1 - 53, XP055844938, Retrieved from the Internet <URL:https://www.5gamericas.org/wp-content/uploads/2019/12/5G-Americas_5G-and-the-Cloud..pdf> [retrieved on 20210927]

## Description

### TECHNICAL FIELD

The present disclosure relates generally to communications, and more particularly to communication methods and related devices and nodes supporting wireless communications.

### BACKGROUND

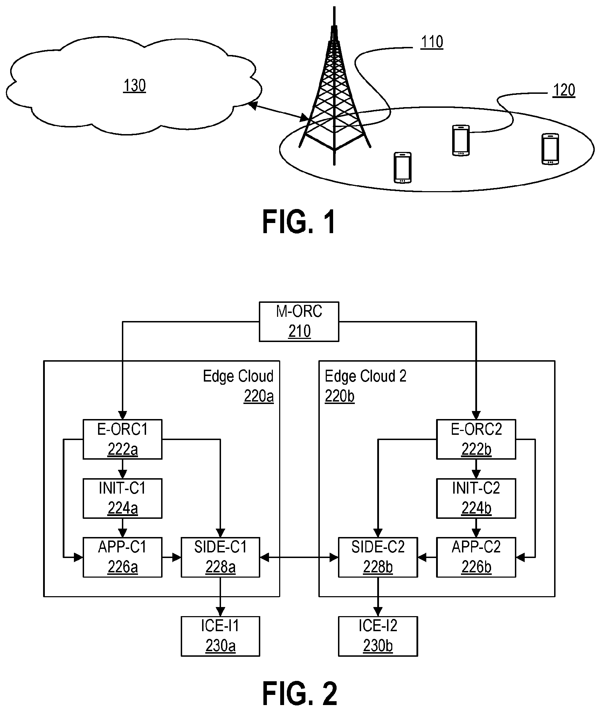

FIG. 1 illustrates an example of a wireless communications network (e.g., a cellular communications network, a new radio ("NR") network, or a 5th Generation ("5G") access network) including a network node 110 (e.g., a 5G base station ("gNB")), multiple communication devices 120 (also referred to as user equipment ("UE")), and a core network 130.

A Kubernetes-based cluster is network address translated ("NATed") internally, but from the outside access to the NATed containers can be achieved by mapping a public internet protocol ("IP") address and a transport-layer port either directly to a container or indirectly by exposing a load balancer via an ingress controller. In some examples, to connect containers located in two different clusters, the two clusters need to open transport ports at public IP addresses and associate them somehow to each other. In other examples, a virtual private network ("VPN") connection is opened between the two clusters, for instance, using a software-defined wide area network ("SD-WAN") solution, in order to save transport layer port numbers. In this example, each side would need to open only one transport port associated with a public IP address. A VPN connection can be configured manually (e.g., in an Istio framework), however, automated commercial products do exist. SD-WAN from Cisco and Submariner.io can connect two clouds using a VPN-based solution, and Network Service Mesh provides optionally VPN-based connectivity.

In some examples, peer-to-peer communication is handled in environments where there are NATs, with Interactive Connectivity Establishment ("ICE") being the typical go-to solution, and it works even when both two communicating end-points (e.g., applications) are behind NATs. ICE requires external infrastructure (with public IP addresses) in the form of Session Traversal of User Datagram Protocol through NAT ("STUN") and Traversal Using Relays around NAT ("TURN") servers. STUN servers are freely available, and they allow the end-point to discover its public Internet facing IP address + port pair, and TURN servers can be used for triangular routing of the traffic when direct NAT traversal has failed. In ICE, two communicating end-points start by discovering their public facing IP address and port pairs (so called address "candidates") from STUN servers, and optionally register to a TURN server in order to obtain a relayed address candidate. Then, the end-points need to exchange somehow their address candidates with each other, which is not defined in the ICE specifications, but rather application has to deal with this on its own - besides address candidate exchange, both of the two communication applications needs to be modified to support an ICE library, and the application protocol also needs to be modified to disambiguate ICE control plane from application-specific traffic. After this, the end-points start a process to discover a working pair of address candidates through the NATs. If this process succeeds, the end-points have obtained direct end-to-end connectivity with each other. Otherwise, they resort to triangular routing via the TURN relays.

Teredo is an alternative to ICE. Unlike ICE, it does not require modifications to the application source code. However, Teredo requires that the application supports IPv6-based connectivity despite the application traffic actually being tunneled over IPv4.

In Kubernetes-based clouds, cloud-native applications can be deployed using two helper/utility containers, thus making the actual application container focus on the main task at hand. The first helper container is called an init container, which configures networking properties such as routes and Domain Name System ("DNS") rules in the application container before Kubernetes sets the application into running state. The second helper is called "sidecar", which can be used, for example, to proxy some or all traffic of the actual application container. For instance, the sidecar can modify or drop application traffic. Thus, for example, security can be terminated in the sidecar. This way, the application container only implements the bare minimum networking in order to establish a connection to the sidecar, which then takes care of more complex networking features. The main difference between "init" and "sidecar" containers is that the "init" container runs before the application container is actually started, whereas the "sidecar" container runs in parallel to the application. This design choice stems partly from the desire to simplify application development in order to avoid integrating complex networking functions into the actual application (i.e., separation of concerns).

A Kubernetes application container is usually deployed using a so called manifest which acts as kind of a "recipe" for starting the application. A manifest can include information about the container image type, how many replicas of the application to start, whether init and/or sidecars are needed or not, the usage of load balancers, and details about the network configuration, among many other things. In the context of multiclusters, the manifest can also include information about the cluster where the container(s) is to be started, which is an extra feature provided by Federated Kubernetes. Alternatively, this functionality can also be supported by a Topology and Orchestration Specification for Cloud Applications ("TOSCA")-based implementation. US 2020/112487 A1 discloses systems and methods for validating a canary release of contains in a containerized production environment. ROSENBERG JDROSEN NET J: "Interactive Connectivity Establishment (ICE): A Protocol for Network Address Translator (NAT) Traversal for Offer/ Answer Protocols; rfc5245.txt", XP015070785 is an Internet Standards Track document relating to Interactive Connectivity Establishment (ICE)

### SUMMARY

The scope of the present invention is defined by the appended claims.

According to other embodiments, a network node, computer program, or computer program product is provided for performing one of the above methods.

Various embodiments described herein allow the connection of containers in two (or more) Kubernetes edge clusters together in a secure way, across layered NATs.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
FIG. 1 is a block diagram illustrating an example of 5^{th} Generation ("5G") network architecture;
FIG. 2 is a block diagram illustrating an example of a connection between two edge nodes according to some embodiments of inventive concepts;
FIG. 3 is a signal flow diagram illustrating an example of a process for setting up secure multicloud connectivity for cloud-native applications according to some embodiments of inventive concepts;
FIG. 4 is a block diagram illustrating an example of a master orchestrator according to some embodiments of inventive concepts;
FIG. 5 is a block diagram illustrating an example of an edge node according to some embodiments of inventive concepts;
FIG. 6 is a flow chart illustrating examples of operations performed by a first edge node according to some embodiments of inventive concepts; and
FIG. 7 is a flow charts illustrating examples of operations performed by a master orchestrator according to some embodiments of inventive concepts.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

Opening transport-layer ports for individual containers manually can be a tedious and error prone task, especially since containers can be destroyed and initialized quite often in the cloud-native era. In some examples, VPN-based connectivity can be implemented manually. In other examples, VPN-based connectivity can be automatically implemented, for example using SD-WAN. However, SD-WAN can be too heavy-weight for small edge clouds, which may not even have public addresses to begin with. In other examples, submariner.io can be used but assumes a separate broker cloud with a public address, which could become a bottleneck for communications if used for triangular routing via the broker cloud. In other examples, Network Service Mesh can be used but assumes that the clusters to be connected do not have any NAT between them, which is an unrealistic assumption in the case of edge clouds. Accordingly, the above examples essentially assume that the site has a public IP addresses.

Modifying applications to support ICE can be complex and can require extra effort for each application separately. Teredo requires the application to support IPv6, which is not feasible in all scenarios.

Small edge clouds and device/loT clouds may not have public IP addresses associated with them and such clouds can be located behind multiple, cascading NATs. To avoid triangular routing of the data plane via another site equipped with a public address (e.g., might occur in submariner.io solution), various embodiments herein describe connecting edge clouds directly to each other (and to central clouds) using an ICE protocol for NAT traversal and optionally some secure transport (e.g., Transport-Layer Security or Virtual Private Network). In some embodiments, the clouds to be connected are based on Kubernetes so that the ICE based NAT traversal is handled using so called Init containers and sidecars that hide the complexity of NAT traversal procedures and separation of ICE protocol from the application payload from the actual application container. The connectivity solution can both be used to connect individual containers together and groups of containers.

In some embodiments, Linux containers located in administratively different Kubernetes clusters can be interconnected. In additional or alternative embodiments, the proposed connectivity works even in the case of multiple cascading NATs at both sides. In additional or alternative embodiments, the application itself does not need to be modified (e.g., with ICE or VPN logic). In additional or alternative embodiments, the proposed connectivity avoids triangular routing of the data plane by establishing direct end-to-end connectivity. In additional or alternative embodiments, a process is described for connecting groups of containers instead of individual containers. In additional or alternative embodiments, a process is proposed that allows leveraging existing infrastructure for ICE (e.g., existing STUN and TURN servers) instead of deploying and maintaining an independent infrastructure. In additional or alternative embodiments, tunneling overhead can be avoided, thereby increasing maximum transmission unit ("MTU"), which can be important for 5G/6G products.

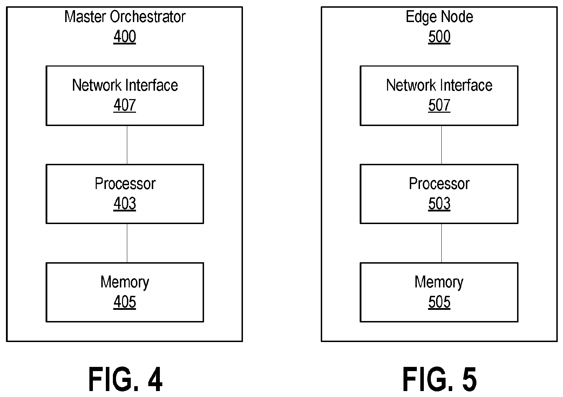

FIG. 4 is a block diagram illustrating elements of a master orchestrator 400 of a communication network (e.g., a cloud network and/or cellular communications network) according to embodiments of inventive concepts. Master orchestrator 400 can be an example of the master orchestrator 210 of FIG. 2. As shown in FIG. 4, the master orchestrator 400 may include network interface circuitry 407 (also referred to as a network interface) configured to provide communications with other nodes of the communication network. The master orchestrator 400 may also include a processing circuitry 403 (also referred to as a processor) coupled to the network interface circuitry, and memory circuitry 405 (also referred to as memory) coupled to the processing circuitry. The memory circuitry 405 may include computer readable program code that when executed by the processing circuitry 403 causes the processing circuitry to perform operations according to embodiments disclosed herein. According to other embodiments, processing circuitry 403 may be defined to include memory so that a separate memory circuitry is not required.

As discussed herein, operations of the master orchestrator 400 may be performed by processing circuitry 403 and/or network interface circuitry 407. For example, processing circuitry 403 may control network interface circuitry 407 to transmit communications through network interface circuitry 407 to one or more other network nodes and/or to receive communications through network interface circuitry from one or more other network nodes. Moreover, modules may be stored in memory 405, and these modules may provide instructions so that when instructions of a module are executed by processing circuitry 403, processing circuitry 403 performs respective operations.

FIG. 5 is a block diagram illustrating elements of an edge node 500 of a communication network (e.g., a cloud network and/or cellular communications network) according to embodiments of inventive concepts. As shown in FIG. 5, the edge node 500 may include network interface circuitry 507 (also referred to as a network interface) configured to provide communications with other nodes of the communication network. The edge node 500 may also include a processing circuitry 503 (also referred to as a processor) coupled to the network interface circuitry, and memory circuitry 505 (also referred to as memory) coupled to the processing circuitry. The memory circuitry 505 may include computer readable program code that when executed by the processing circuitry 503 causes the processing circuitry to perform operations according to embodiments disclosed herein. According to other embodiments, processing circuitry 503 may be defined to include memory so that a separate memory circuitry is not required.

As discussed herein, operations of the edge node 500 may be performed by processing circuitry 503 and/or network interface circuitry 507. For example, processing circuitry 503 may control network interface circuitry 507 to transmit communications through network interface circuitry 507 to one or more other network nodes and/or to receive communications through network interface circuitry from one or more other network nodes. Moreover, modules may be stored in memory 505, and these modules may provide instructions so that when instructions of a module are executed by processing circuitry 503, processing circuitry 503 performs respective operations.

Edge node 500 can be an example of either Edge Cloud 1 220a or Edge Cloud 2 220b of FIG. 2. Accordingly, edge node 500 can include one or more of an edge orchestrator ("E-ORC"), init container ("INIT-C"), application container ("APP-C"), or sidecar container ("SIDE-C").

FIG. 2 provides an architecture view of some embodiments. Master Orchestrator ("M-ORC") 210 manages two edge clusters (Edge Cloud 1 220a and Edge Cloud 2 220b) indirectly using their associated Edge Orchestrators (Edge Orchestrator 1 ("E-ORC1") 222a and Edge Orchestrator 2 ("E-ORC2") 222b). In some examples, the M-ORC 210 can be assumed to have a publicly reachable address (or at least one transport-layer port) in which case it can be deployed to a central cloud. In other examples, if Edge Clouds 220a-b have a publicly reachable address, M-ORC 210 can also be deployed there. M-ORC 210 and E-ORCs 222a-b can use, for example, TOSCA and/or Federated Kubernetes for multi-cluster management. For example, in Edge Cloud 1 220a, E-ORC1 222a can manage three types of containers: before starting the first actual application container ("APP-C1") 226a, it spins up a first Init Container ("INIT-C1") 224a that sets up routing rules in APP-C1 226a so that all communication for APP-C1 226a is proxied via a first sidecar container ("SIDE-C1") 228a. The first sidecar container 228a is responsible for the NAT traversal procedures and security establishment (e.g., TLS or VPN) to the second sidecar container ("SIDE-C2") 228b located in Edge Cloud 2 220b (which also includes a second init container ("INIT-C2") 224b and a second application container ("APP-C2") 226b. The M-ORCH 210 can initiate the interconnection of APP-C1 226a and APP-C2 226b by requesting E-ORC1 222a and E-ORC2 222b to interconnect the APP-Cs 226a-b.

In some examples, the two edge clouds 220a-b learn about the location of each other because the sidecars 228a-b communicate location information via edge orchestrators 222a-b that further disseminate the information via the master orchestrator 210 (e.g., could be either event-based information via a Kubernetes application programming interface ("API") server or direct push/pull based information exchange). A first ICE infrastructure ("ICE-I1") 230a and a second ICE infrastructure ("ICE-I2") 230b can each include one or more STUN servers (that the sidecars 228a-b can query for their public facing address candidate) and optionally one or more TURN servers (that the sidecars 228a-b can request for a proxied candidate in the case of a NAT traversal procedure fail). In some examples, ICE-I1 230a and ICE-I2 230b share the same one or more STUN servers and/or TURN servers.

In some embodiments herein, the term address candidate is used to refer to a transport address that is a potential point of contact for receipt of data. In some examples, an address candidate can be referred to as a candidate or candidate information. Candidates also have properties, for example, their type (e.g., server reflexive, relayed, or host), priority, foundation, and base.

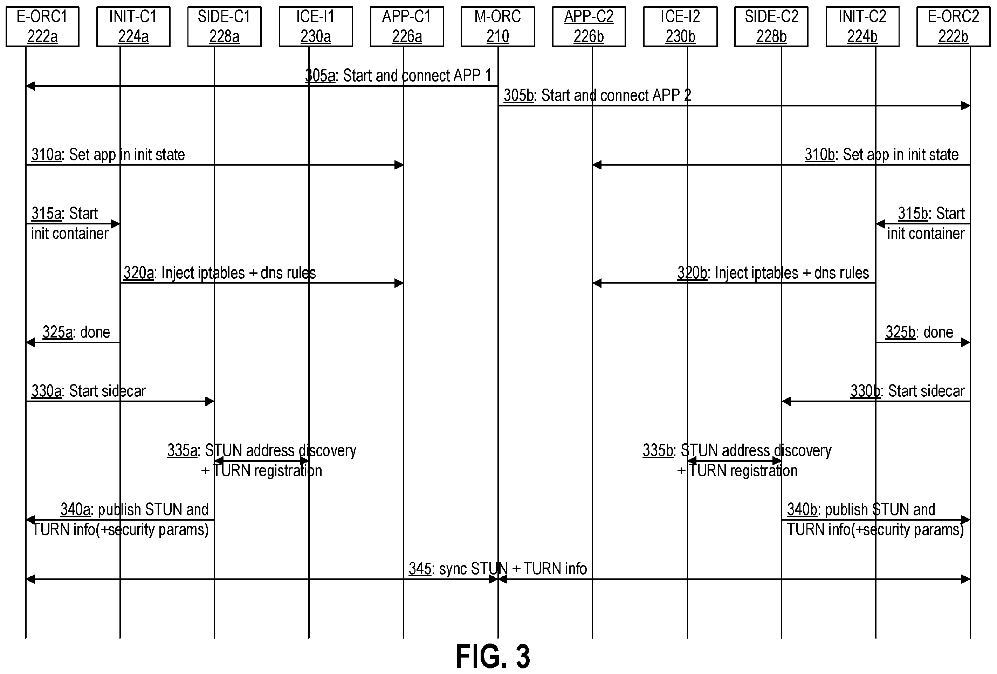

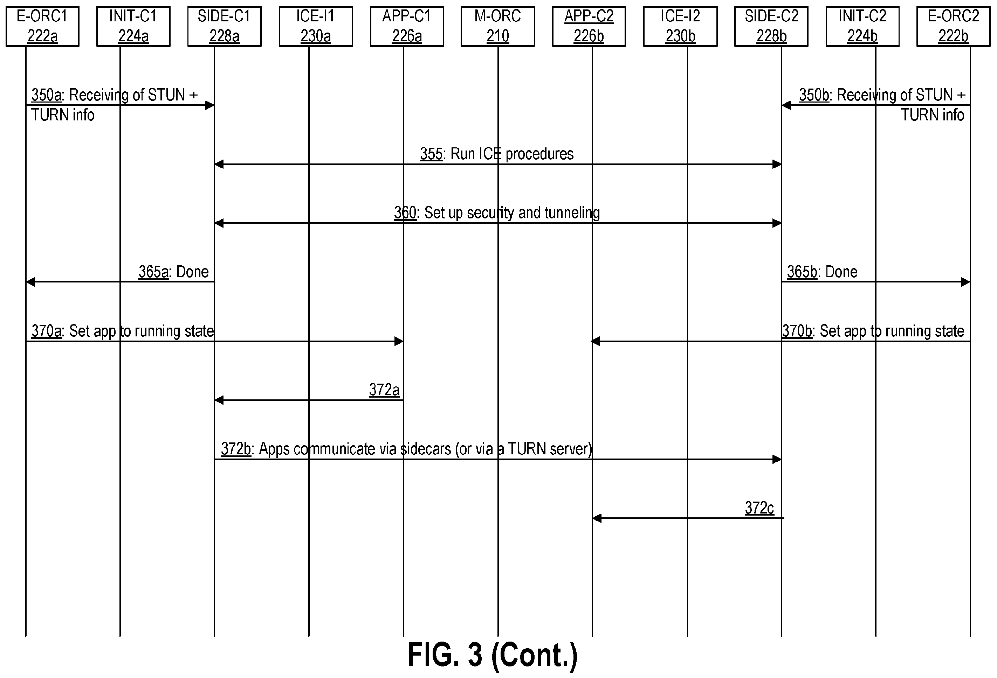

FIG. 3 illustrates an example of a communication flow between edge clouds 220a-b. Operations 305a, 310a, 315a, 320a, 325a, 330a, 335a, and 340a are performed in relation to edge cloud 1 220a. Operations 305b, 310b, 315b, 320b, 325b, 330b, 335b, and 340b are similar to Operations 305a, 310a, 315a, 320a, 325a, 330a, 335a, and 340a respectively, but are performed in relation to edge cloud 2 220b.

At operation 305a, the M-ORC 210 contacts E-ORC1 222a to deploy APP-C1 226a into edge cloud 220a, which needs to have connectivity with APP-C2 226b (deployed into edge cloud 220b via E-ORC2 222b in operation 305b). In some examples, the application manifest includes implementation specific configuration information for the Kubernetes extension. The exact format of this configuration information is not defined and can be set, for example, with the environment variables in the K8s manifest file. The configuration information can indicate relevant parameters (e.g., ICE and security information).

At operation 310a, E-ORC1 222a initializes APP-C1 226a, but does not set it in a running state.

At operation 315a, based on the extra information in the manifest, E-ORC1 222a starts INIT-C1 224a (an init container within the same pod as APP-C1 226a). The extra information can be used to configure INIT-C1 224a. For example, INIT-C1 224 can be configured based on an optional key distribution to APP-C1 226a. In some embodiments herein, the term key describes an encryption and/or cryptographic key used for cryptographic operations not solely limited to encryption.

At operation 320a, INIT-C1 224a injects routes and/or iptables rules to APP-C1 226a that effectively enforce the traffic of APP-C1 226a to traverse via SIDE-C1 228a or are used for bypassing the SIDE-C1 228a (e.g., the APP-C1 and APP-C2 are able to communicate directly with each other). In some examples, the routes and/or iptable/qdisc rules may apply to all traffic or just the traffic destined to APP-C2 226b. Limiting the routes and/or iptable/qdisc rules to just the traffic between APP-C1 226a and APP-C2 226b can be useful when combining more than two containers, in which case APP-C1 226a could be configured to send traffic for APP-C2 226b to SIDE-C1 228a via another sidecar container. Some other application container in the same pod could also be configured to send at least part of its traffic to either SIDE-C1 228a or to the other sidecar container. In additional or alternative examples, INIT-C1 224a may inject DNS rules to APP-C1 226a so that APP-C1 226a can use a DNS name in order to resolve the address of APP-C2 226b.

When finished, at operation 325a, INIT-C1 224a exits with successful status and the E-ORC1 222a can proceed.

At operation 330a, the E-ORC1 222a schedules SIDE-C1 228a that M-ORC 210 configured in the manifest (that E-ORC1 222a received from M-ORC 210 in operation 305a) so that APP-C1 226a starts only when SIDE-C1 228a is ready. SIDE-C1 228a is, in addition to traditional operations, configured to check for NATs and perform NAT traversal operations for APP-C1 226a, this includes both the indication that NAT traversal should be completed as well as relevant parameters such as server (e.g., STUN/TURN) addresses. This can be configured using the parameters in the manifest.

At operation 335a, SIDE-C1 228a looks up its public-side address/port pair it is using by communicating with ICE-I1 230a (which can include a STUN server) and, in some examples, registers a TURN-based address used for relaying traffic if the NAT traversal fails.

At operation 340a, SIDE-C1 228a publishes its public-side address candidates (e.g., STUN and TURN addresses) to E-ORC1 222a directly or indirectly (e.g., via Kubernetes API server). In some examples, SIDE-C1 228a may do this, for example, via a Kubernetes API server (e.g., event-based information) or using some other directory.

At operation 345, each of the E-ORCs 222a-b inform the M-ORC 210 about the address candidates of their respective SIDE-Cs 228a-b and each of the E-ORCs 222a-b receive a similar set of addresses for connecting to the other APP-C 226a-b. For example, E-ORC 222a informs the M-ORC 210 about the address candidates of SIDE-C1 228a (e.g., addresses for contacting APP-C1 226a or a specific cluster when connecting clusters instead of applications) and receives a similar set of addresses for connecting to APP-C2 226b that was shared to M-ORC 210 from E-ORC2 222b. After operation 345, the M-ORC 210, E-ORC1 222a and E-ORC2 222b have synchronized information about the address candidates of both clusters.

At operation 350a, E-ORC1 222a disseminates the address candidates of SIDE-C2 228b to SIDE-C1 228a. At operation 350b, E-ORC2 222b disseminates the address candidates of SIDE-C1 228a to SIDE-C2 228b. After operations 350a-b, SIDE-C1 228a and SIDE-C2 228b have learned each other's address candidates and, at operation 355, they initiate ICE procedures.

At operation 360, the ICE procedures are finished, and the result is either a direct end-to-end route or a triangular route via a TURN server. In embodiments, the SIDE-Cs 228a-b can now set up a security protocol (e.g., TLS or VPN tunnel) according to the configuration defined in the application manifest (which defines what protocol to use for security and any relevant parameters for the protocol).

At operations 365a-b, both SIDE-C 228a-b signal to their respective E-ORCs 222a-b that they have finished initialization. At operations 370a-b, the E-ORCs 222a-b set their respective APP-Cs 226a-b in a running state.

At operations 372a-c, the APP-Cs 226a-b communicate with each other indirectly. For example, the application traffic always traverses the sidecar that acts as proxy for the traffic. The sidecars (SIDE-Cs 228a-b) communicate with each other either directly over an end-to-end path or via a TURN server in the event that ICE-based NAT traversal failed.

In some examples, since all containers in a pod share the network interface, the application container and sidecar are using the same IP address. Hence, a sidecar just changes the destination port number when it proxies traffic from the application, and, correspondingly, the source port, when the sidecar proxies traffic to the application. Therefore, no IP-over-IP tunneling is needed.

In additional or alternative embodiments, when using a network service mesh ("NSM") framework and/or a future version it is possible to omit the sidecar completely after the NAT traversal procedures because all the containers in the same pod share the same IP address. In some examples, the sidecar would set up a firewall rule (e.g., Linux iptables rule) in the pod to forward all traffic to/from the port of the sidecar to the application container. This can require two NAT rules: one for incoming and another for outgoing traffic. A benefit of this includes a smaller latency because the sidecar is not proxying the traffic.

In additional or alternative examples, Teredo can be used in the sidecars as an alternative to ICE for NAT traversal. In this case, APP-C would need to support IPv6, but connectivity between sidecars would be based on IPv6 tunneling over IPv4 (as specified in RFC4380), i.e. IP-over-IP tunneling is needed.

In embodiments, the connection between the sidecars is secured based on the application manifest. The security could be based on TLS, IPsec, QUIC (tunneled or non-tunneled) or something else (e.g., VPN+NAT traversal coupled as specified in RFC5770 or draft-ietf-hip-native-nat-traversal-32). In additional or alternative embodiments, the connection between the application containers can be secured end-to-end. For example, in regard to the example of FIG. 3, at operations 305a-b, the M-ORC 210 could indicate the security requirements for the interconnection of the two sidecars (SIDE-Cs 228a-b), or even directly to the application containers (APP-Cs 226a-b) if full end-to-end security is needed. In some examples, the ICE/STUN/TURN protocols include a username-password authentication that is handled in the sidecars (with the credentials originating from the E-ORC or M-ORC).

In additional or alternative embodiments, for full end-to-end security, two options exist (symmetric and asymmetric keys). Symmetric keys can be generated and provisioned by M-ORC 210 so that both applications 226a-b would end up with the same shared secret. In this example, the shared secret would be provided in operations 305a-b to each of the E-ORCs 222a-b. Asymmetric keys can be generated by M-ORC 210, E-ORCs 222a-b, APP-Cs 226a-b, INIT-Cs 224a-b, or SIDE-C. If generated by M-ORC 210, the keys can be provided by M-ORC 210 to each of the E-ORCs 222a-b in operations 305a-b. If the keys are not generated by the M-ORC 210, the M-ORC 210 may indicate and/or instruct (e.g., via a manifest file or other signaling) an entity to generate the keys. If APP-C 226a generate the key pair, it would be used in a leap of faith fashion because the public key would not be known to the peer APP-C 226b.

In additional or alternative embodiments, for full end-to-end security, at operations 310a-b, when initializing APP-Cs 226a-b, E-ORCs 222a-b can provide the key(s) (generated by E-ORC 222a-b itself or M-ORC 210) to APP-C 226a-b. If APP-C 226a-b generates the keys itself, this could be configured/indicated during initialization of the container together with an indication that security should be used.

In additional or alternative embodiments, for full end-to-end security, at operations 315a-b, 320a-b, and 325a-b of FIG. 3, if the M-ORC 210 or E-ORC 222a-b has generated the key(s), the E-ORCs 222a-b can provide the key(s) to INIT-Cs 224a-b at operation 315a-b, and to APP-Cs 226a-b at operation 320a-b. In an alternative example, as part of operation 320a-b, the INIT-Cs 224a-b each generate an asymmetric key pair for their respective APP-C 226a-b and provision it. For example, the INIT-Cs 224a-b communicate the associated public key back to their respective E-ORCs 222a-b at operation 325a-b. In an alternative example, if one of the APP-Cs 226a-b is to generate the keys itself, this could be configured/indicated by its respective INIT-C 224a-b at operation 320a-b together with an indication that security should be used (if not indicated in operation 310a-b).

In additional or alternative embodiments, for full end-to-end security, at operations 330a-b the E-ORC 222a-b can provide security requirements to its respective SIDE-C 228a-b (e.g., related to protecting traffic between the sidecars instead of between the application containers). This security requirements can include credentials generated by the M-ORC 210 or the respective E-ORC 222a-b. In additional or alternative embodiments, there could be an indication that SIDE-C 228a-b should generate the key pair.

In additional or alternative embodiments, for full end-to-end security, at operations 340a-b, if SIDE-C 228a-b has generated the key pair, it provides the public key together with the address information to its respective E-ORC 222a-b.

In additional or alternative embodiments, for full end-to-end security, at operations 345 and 350a-b, if keys were not generated by M-ORC 210 then the E-ORCs 222a-b can exchange keys and other relevant security parameters with each other. The parameters/keys of the peer E-ORC can be provisioned to their respective sidecars.

In additional or alternative embodiments, for full end-to-end security, at operation 360 the keys and security parameters are used for establishing a secure connection between the sidecars.

In additional or alternative embodiments, for full end-to-end security, at operations 370a-b, if APP-C 226a-b is to generate the keys itself, this could occur when the corresponding E-ORC 222a-b sets the container to the running state, if not done earlier.

In additional or alternative embodiments, for full end-to-end security, at operations 372a-c, the applications start the communication using end-to-end security based on the credentials, either shared between the applications or, if not (i.e. applications have generated their respective asymmetric key pairs, but public keys have not been shared between the applications beforehand), then the security would be based on leap of faith.

In some embodiments, the security-related examples described above can be performed to interconnect two applications in different edge clouds. For example, the above examples can be repeated for each application pair.

In additional or alternative embodiments, as an optimization to securely interconnecting two APP-Cs in a NATed environment as discussed above, the edge clouds can implement gateway ("GW") functionality for interconnecting clusters, pods, or full edge clouds with each other. In some examples, the edge clouds run their dedicated GWs that run the described NAT traversal procedure in order to establish a direct (or relayed) connection between the clusters/pods/edges. After this, an APP-C can send traffic (e.g., as configured by an init container) via its sidecar destined to the other cluster/pod/edge via a GW that has taken care of the NAT traversal and established a connection between the clusters/pods/edges. Thus, traffic from all applications in one cluster/pod/edge destined to some application(s) in another cluster/pod/edge can go through the same tunnel set up between the respective GWs. A GW would have to encapsulate the original "inner" packet with an external UDP and IP header to be used for routing the packets to another GW. Received packets can be decapsulated and resulting inner packet sent to the destination application. These can be forwarded to the intended target application container.

In some embodiments, the process for interconnecting clusters/pods/edges can provide performance benefits as the NAT traversal procedure has only to be repeated once for each cluster/pod/edge pair, instead of repeating it for each application pair.

In some examples, a host-based approach is provided. In the host-based approach, the behavior can be different after the M-ORC schedules more than two containers into two edge clouds, belonging to the same tenant. In the clusters with multiple containers, the M-ORC tries to schedule the app containers to the same pair of host machines as on the previous round. Then the already running sidecar container can directly be reused as the app containers are running in the same pod (e.g., the Init container associates the routes of the container with an existing sidecar and notifies the sidecar about this). If scheduling to the exact same set of hosts is not possible, then new sidecars will be created on both sides as depicted earlier.

In additional or alternative examples, a tenant-based approach is provided. In the tenant-based approach, the master orchestrator initiates the NAT traversal procedures for a gateway (instead of side container) only once in each cluster to be connected. When an application is launched, the sidecar does not initiate NAT traversal procedures but rather routes packet to the gateway when the traffic is destinated to another cluster. It is possible to handle the NAT traversal procedures before the tenant has started any application containers. Since the GWs are under very heavy load, some hardware optimizations may be needed, and IP tunneling may be needed in the form of a (VPN) tunnel between the gateways.

In additional or alternative examples, a cluster-based approach is provided in which gateways are performing NAT traversal. In the cluster-based approach, the gateway is not tenant specific but rather cluster specific. In this approach, the traffic of the tenants is not separated at the gateway but rather delivered between clusters using the same virtual private network ("VPN") tunnel established between the gateways, so the sidecars may have to apply some transport layer security ("TLS") among themselves in order protect the traffic of the tenant. This approach can require even more from the underlying hardware than the previous approach.

In some embodiments, while virtual machines "migrate" from a network to another, cloud-native containers, in general, do not. Instead, cloud-native containers are usually assumed to be stateless, so they can be terminated and started when moving them. So, the assumption here would be that when a container is moved from one cluster to another, the instance would be terminated and started in the destination cluster. Hence, the operations illustrated in FIG. 3 may be repeated upon movement (unless, for example, one of the above optimizations is in place).

The invention described herein allow connecting of containers in two (or more) Kubernetes edge clusters together in a secure way, across layered NATs.

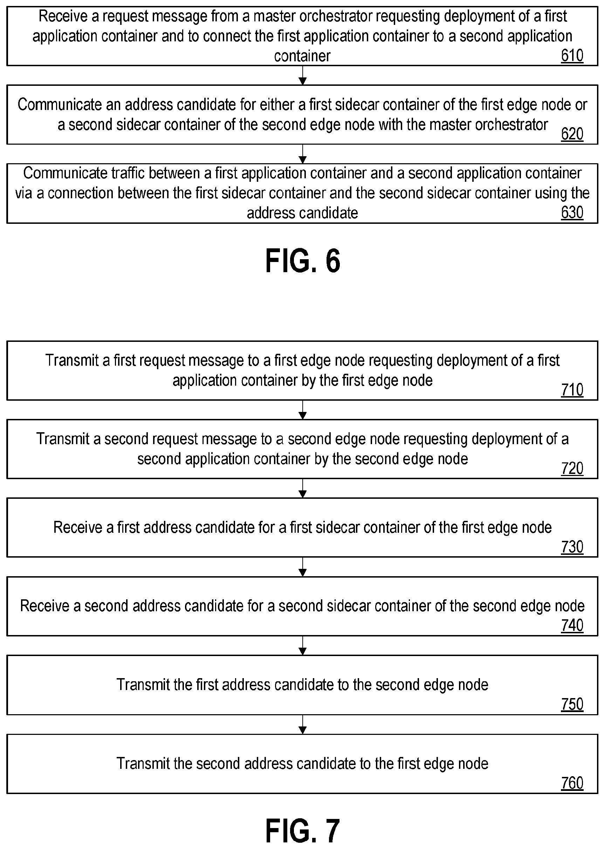

Operations of an edge node 500 (implemented using the structure of the block diagram of FIG. 5) will now be discussed with reference to the flow chart of FIG. 6 according to some embodiments of inventive concepts. For example, modules may be stored in memory 505 of FIG. 5, and these modules may provide instructions so that when the instructions of a module are executed by respective network node processing circuitry 503, processing circuitry 503 performs respective operations of the flow charts.

In FIG. 6, a process of operating a first edge node in a communications network that includes a master orchestrator and a second edge node is illustrated.

At block 610, processing circuitry 503 receives, via network interface 507, a request message from the master orchestrator requesting deployment of the first application container and to connect the first application container to the second application container via the first sidecar container. In some embodiments, the request message includes configuration information. The configuration information can indicate that the first application container be connected to the second application container using an interactive connectivity establishment, ICE, procedure.

At block 620, processing circuitry 503 communicates, via network interface 507, an address candidate for either a first sidecar container of the first edge node or a second sidecar container of the second edge node with the master orchestrator.

In additional or alternative embodiments, communicating the address candidate includes transmitting a first address candidate for the first sidecar container to the master orchestrator. In additional or alternative embodiments, the first address candidate includes a public address of the first sidecar container. Transmitting the first address candidate further includes determining, by the first sidecar container, a public address of the first sidecar container by communicating with a Session Traversal of User Datagram Protocol through Network Address Translated, STUN, server.

In additional or alternative embodiments, the first address candidate includes an address of a Traversal Using Relays around Network Address Translated, TURN, server.

In additional or alternative embodiments, communicating the address candidate includes receiving a second address candidate for the second sidecar container from the master orchestrator.

In additional or alternative embodiments, the address candidate includes a list of address candidates communicated with the master orchestrator. In some examples, communicating the address candidate includes transmitting a first list of address candidates for the first sidecar container to the master orchestrator. In additional or alternative examples, communicating the address candidate includes receiving a second list of address candidates for the second sidecar container from the master orchestrator.

At block 630, processing circuitry 503 communicates, via network interface 507, traffic between a first application container of the first edge node and a second application container of the second edge node via a connection between the first sidecar container and the second sidecar container using the address candidate.

In some embodiments, communicating the traffic between the first application container and the second application container includes receiving, by the first sidecar container, the traffic from the second application container via the second sidecar container using the first address candidate and providing, by the first sidecar container, the traffic to the first application container. In additional or alternative embodiments, when the first address is a public address of the first sidecar container, receiving the traffic from the second application container includes receiving the traffic directly from the second sidecar container at the public address of the first sidecar container.

In some embodiments herein, public address may be used to refer to a server reflexive candidate or a relayed candidate. A server reflexive candidate can be used to refer to a candidate whose IP address and port are bindingly allocated by a NAT for a sidecar when it sent a packet through the NAT to a STUN server. A sidecar container can learn the server reflexive candidates from STUN servers using a binding request, or from TURN servers, which provide both a relayed and a server reflexive candidate. In additional or alternative embodiments, besides server reflexive and relayed candidates, other candidates (e.g., host candidate and peer reflexive) are also collected by the sidecar and are communicated to the peer sidecar.

In additional or alternative embodiments, the first address candidate includes an address of a Traversal Using Relays around Network Address Translated, TURN, server, and receiving the traffic from the second application container includes, in response to a Network Address Translated, NAT, traversal failure, receiving the traffic from the second sidecar container via the TURN server.

In additional or alternative embodiments, communicating the traffic between the first application container and the second application container includes transmitting, by the first sidecar container, the traffic from the first application container to the second application container via the second sidecar container using the second address candidate. In some examples, the second address candidate includes a public address of the second sidecar container and transmitting the traffic to the second application container includes transmitting the traffic directly to the public address of the second sidecar container. In additional or alternative examples, the second address candidate includes an address (also referred to herein as a relayed candidate) of a Traversal Using Relays around Network Address Translated, TURN, server, and transmitting the traffic to the second application container includes, in response to a Network Address Translated, NAT, traversal failure, transmitting the traffic to the second sidecar container via the TURN server.

In additional or alternative embodiments, in response to communicating the address candidate for either the first sidecar container or the second sidecar container, processing circuitry 503 performs an interactive connectivity establishment, ICE, procedure. In additional or alternative embodiments, in response to communicating the address candidate for either the first sidecar container or the second sidecar container, processing circuitry 503 sets up and secures tunneling between the first sidecar container and the second sidecar container.

In additional or alternative embodiments, the configuration information received at block 610 indicates an entity (e.g., a container or a orchestrator) of the first edge node responsible for generating a cryptographic key material and associated parameters (also referred to herein as an encryption key) for the traffic. Communicating the address candidate at block 620 further includes transmitting the encryption key to the master orchestrator, and communicating the traffic between the first application container and the second application container at block 630 further includes communicating over a connection secured based on the cryptographic key material and associated parameters or communicating the traffic using the encryption key for encryption and/or decryption of the traffic.

In additional or alternative embodiments, the request message received at block 610 includes an encryption key and communicating the traffic between the first application container and the second application container at block 630 includes communicating over a connection secured based on the cryptographic key material and associated parameters or communicating the traffic using the encryption key for encryption and/or decryption of the traffic.

Various operations of FIG. 6 may be optional. For example, in some embodiments block 610 may be optional.

Operations of a master orchestrator 400 (implemented using the structure of the block diagram of FIG. 4) will now be discussed with reference to the flow chart of FIG. 7 according to some embodiments of inventive concepts. For example, modules may be stored in memory 405 of FIG. 4, and these modules may provide instructions so that when the instructions of a module are executed by respective network node processing circuitry 403, processing circuitry 403 performs respective operations of the flow chart.

FIG. 7 illustrates an example of a process of operating a master orchestrator in a communications network that includes a first edge node and a second edge node.

At block 710, processing circuitry 403 transmits, via network interface 407, a first request message to a first edge node. The first request message can request deployment of a first application container by the first edge node.

At block 720, processing circuitry 403 transmits, via network interface 407, a second request message to a second edge node. The second request message requests deployment of a second application container by the second edge node. The first request message and the second request message further request that the first application container and the second application container are connected.

In some embodiments, the first request message and the second request message each include configuration information. In some examples, the configuration information indicates that the first application container and the second application container be connected via the first sidecar container and the second sidecar container using an interactive connectivity establishment, ICE, procedure.

In additional or alternative embodiments, the first request message and the second request message each include a key to be used for the communication. For example, the key can be an encryption key to be used for cryptographic operations.

At block 730, processing circuitry 403 receives, via network interface 407, a first address candidate for a first sidecar container from the first edge node. At block 740, processing circuitry 403 receives, via network interface 407, a second address candidate for a second sidecar container from the second edge node.

In some embodiments, the first address candidate includes a public address of the first sidecar container and/or the second address candidate includes a public address of the second sidecar container.

In additional or alternative embodiments, the first address candidate and/or the second address candidate further includes a relayed candidate allocated by a Traversal Using Relays around Network Address Translated, TURN, server. In some embodiments herein, the term relayed candidate is used herein to refer to an address candidate that is obtained by sending a TURN Allocate request from a host candidate to a TURN server. The relayed candidate is resident on the TURN server, and the TURN server relays packets back towards the sidecar.

At block 750, processing circuitry 403 transmits, via network interface 407, the first address candidate to the second edge node. At block 760, processing circuitry 403 transmits, via network interface 407, the second address candidate to the first edge node.

In some embodiments, the configuration information described above at block 720 indicates a container of each edge node responsible for generating an encryption key for traffic between the first application container and the second application container. Receiving the first address candidate includes receiving a first encryption key. Receiving the second address candidate includes receiving a second encryption key. Transmitting the first address candidate includes transmitting the first encryption key to the second edge node. Transmitting the second address candidate includes transmitting the second encryption key to the first edge node.

Various operations of FIG. 7 may be optional. For example, in some embodiments blocks 710 and 720 may be optional.

In some embodiments, the operations in FIGS. 6-7 are implemented using a Kubernetes or Federated Kubernetes Operator reconciliation loop.

Explanations are provided below for various abbreviations/acronyms used in the present disclosure.

| Abbreviation | Explanation |
|---|---|
| ICE | Interactive Connectivity Establishment protocol |
| NAT | Network Address Traversal |
| STUN | Session Traversal Utilities for NAT |
| TURN | Traversal Using Relays around NAT |
| VPN | Virtual Private Networking |
| TOSCA | Topology and Orchestration Specification for Cloud Applications |

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, microcode, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

## Claims

1. A method of operating a first edge node (222a, 500) in a communications network, implemented using Kubernetes and an Interactive Connectivity Establishment, ICE, protocol for network address translate, NAT, traversal, that includes a master orchestrator (210, 400) and a second edge node (222b, 500), the method comprising:
communicating (620) an address candidate for either a first sidecar container of the first edge node or a second sidecar container of the second edge node with the master orchestrator, wherein in response to communicating the address candidate for either the first sidecar container or the second sidecar container:
performing an interactive connectivity establishment, ICE, procedure; and
setting up secure tunneling between the first sidecar container and the second sidecar container according to an application manifest, the application manifest defining a security protocol to use and any relevant parameters for the protocol, in response to communicating the address candidate for either the first sidecar container or the second sidecar container; and
communicating (630) traffic between a first application container of the first edge node and a second application container of the second edge node via a connection between the first sidecar container and the second sidecar container using the address candidate.

2. The method of Claim 1, wherein communicating the address candidate comprises transmitting a first address candidate for the first sidecar container to the master orchestrator,
wherein communicating the traffic between the first application container and the second application container comprises:
receiving, by the first sidecar container, the traffic from the second application container via the second sidecar container using the first address candidate; and
providing, by the first sidecar container, the traffic to the first application container, optionally
wherein the first address candidate comprises a public address of the first sidecar container,
wherein transmitting the first address candidate further comprises determining, by the first sidecar container, a server reflexive candidate of the first sidecar container by communicating with a Session Traversal of User Datagram Protocol through Network Address Translated, STUN, server, and
wherein receiving the traffic from the second application container comprises receiving the traffic directly from the second sidecar container at the server reflexive candidate of the first sidecar container, and/or
wherein the first address candidate comprises a relayed candidate of a Traversal Using Relays around Network Address Translated, TURN, server, and
wherein receiving the traffic from the second application container comprises, in response to a Network Address Translated, NAT, traversal failure, receiving the traffic from the second sidecar container via the TURN server.

3. The method of any of Claims 1-2, wherein communicating the address candidate comprises receiving a second address candidate for the second sidecar container from the master orchestrator,
wherein communicating the traffic between the first application container and the second application container comprises transmitting, by the first sidecar container, the traffic from the first application container to the second application container via the second sidecar container using the second address candidate, optionally
wherein the second address candidate comprises a server reflexive candidate of the second sidecar container, and
wherein transmitting the traffic to the second application container comprises transmitting the traffic directly to the server reflexive candidate of the second sidecar container, and/or
wherein the second address candidate comprises a relayed candidate allocated by a Traversal Using Relays around Network Address Translated, TURN, server, and
wherein transmitting the traffic to the second application container comprises, in response to a Network Address Translated, NAT, traversal failure, transmitting the traffic to the second sidecar container via the TURN server.

4. The method of any of Claims 1-3, further comprising:
receiving (610) a request message from the master orchestrator requesting deployment of the first application container and to connect the first application container to the second application container via the first sidecar container.

5. The method of Claim 4, wherein the request message comprises configuration information, the configuration information indicating that the first application container be connected to the second application container using an interactive connectivity establishment, ICE, procedure, optionally
wherein the configuration information indicates an entity of the first edge node responsible for generating cryptographic key material and associated parameters for the traffic,
wherein communicating the address candidate further comprises transmitting the cryptographic key material and associated parameters to the master orchestrator, and
wherein communicating the traffic between the first application container and the second application container comprises communicating the traffic over a connection secured based on the cryptographic key material and associated parameters, and/or
wherein the request message comprises a cryptographic key material and associated parameters, and
wherein communicating the traffic between the first application container and the second application container comprises communicating the traffic over a connection secured based on the cryptographic key material and associated parameters.

6. A method of operating a communications network, implemented using Kubernetes and an Interactive Connectivity Establishment, ICE, protocol for network address translate, NAT, traversal, that includes a master orchestrator (210, 400), a first edge node (222a, 500) and a second edge node (222b, 500), the method comprising performing, by the first edge node, the steps of any of Claims 1 to 5 and performing, by the master orchestrator, the steps of:
receiving (730) a first address candidate for a first sidecar container from the first edge node;
receiving (740) a second address candidate for a second sidecar container from the second edge node;
in response to receiving the first address candidate, transmitting (750) the first address candidate to the second edge node; and
in response to receiving the second address candidate, transmitting (760) the second address candidate to the first edge node.

7. The method of Claim 6, further comprising performing, by the master orchestrator, the steps of:
transmitting (710) a first request message to the first edge node, the first request message requesting deployment of a first application container by the first edge node; and
transmitting (720) a second request message to the second edge node, the second request message requesting deployment of a second application container by the second edge node, the first request message and the second request message further requesting that the first application container and the second application container be connected.

8. The method of Claim 7, wherein the first request message and the second request message each comprise configuration information, the configuration information indicating that the first application container and the second application container be connected via the first sidecar container and the second sidecar container using an interactive connectivity establishment, ICE, procedure, optionally
wherein the configuration information indicates a container of each edge node responsible for generating a cryptographic key material and associated parameters for traffic between the first application container and the second application container,
wherein receiving the first address candidate comprises receiving a first cryptographic key,
wherein receiving the second address candidate comprises receiving a second cryptographic key,
wherein transmitting the first address candidate comprises transmitting the first cryptographic key to the second edge node, and
wherein transmitting the second address candidate comprises transmitting the second cryptographic key to the first edge node, and/or
wherein the first request message and the second request message each comprise a cryptographic key material and associated parameters.

9. The method of any of Claims 6-8, wherein the first address candidate comprises a public address of the first sidecar container, and optionally
wherein the first address candidate further comprises an address of a Traversal Using Relays around Network Address Translated, TURN, server.

10. A first edge node (222a, 500) in a communications network implemented using Kubernetes and an Interactive Connectivity Establishment, ICE, protocol for network address translate, NAT, traversal, that includes a master orchestrator (210, 400) and a second edge node (222b, 500), the first edge node comprising:
processing circuitry (503); and
memory (505) coupled with the processing circuitry, wherein the memory includes instructions that when executed by the processing circuitry causes the first edge node to perform operations according to any of Claims 1-5.

11. A computer program product comprising a non-transitory storage medium including program code to be executed by processing circuitry (503) of a first edge node (222a, 500) in a communications network implemented using Kubernetes and an Interactive Connectivity Establishment, ICE, protocol for network address translate, NAT, traversal, that includes a master orchestrator (210, 400) and a second edge node (222b, 500), whereby execution of the program code causes the first edge node to perform operations according to any of Claims 1-5.

12. A communications network, implemented using Kubernetes and an Interactive Connectivity Establishment, ICE, protocol for network address translate, NAT, traversal, that includes a first edge node (222a, 500) of Claim 10, a master orchestrator (210, 400) and a second edge node (222b, 500), the master orchestrator comprising:
processing circuitry (403); and
memory (305) coupled with the processing circuitry, wherein the memory includes instructions that when executed by the processing circuitry causes the master orchestrator to perform operations according to any of Claims 6-9.

## Patentansprüche

1. Verfahren zum Betreiben eines ersten Randknotens (222a, 500) in einem Kommunikationsnetzwerk, das unter Verwendung von Kubernetes und einem Interactive Connectivity Establishment-Protokoll, ICE-Protokoll, für Network Address Translate-Traversierung, NAT-Traversierung, implementiert wird und das einen Master-Orchestrator (210, 400) und einen zweiten Randknoten (222b, 500) umfasst, wobei das Verfahren Folgendes umfasst:
Kommunizieren (620) eines Adresskandidaten für entweder einen ersten Sidecar-Container des ersten Randknotens oder einen zweiten Sidecar-Container des zweiten Randkotens mit dem Master-Orchestrator, wobei in Reaktion auf das Kommunizieren des Adresskandidaten für entweder den Sidecar-Container oder den zweiten Sidecar-Container
eine Prozedur zur Herstellung interaktiver Konnektivität, ICE, durchgeführt wird; und
ein sicherer Tunnel zwischen dem ersten Sidecar-Container und dem zweiten Sidecar-Container gemäß einem Anwendungsmanifest, wobei das Anwendungsmanifest ein Sicherheitsprotokoll zur Verwendung und alle relevanten Parameter für das Protokoll definiert, in Reaktion auf das Kommunizieren des Adresskandidaten für entweder den ersten Sidecar-Container oder den zweiten Sidecar-Container aufgebaut wird; und
Verkehr zwischen einem ersten Anwendungscontainer des ersten Randknotens und einem zweiten Anwendungscontainer des zweiten Randknotens über eine Verbindung zwischen dem ersten Sidecar-Container und dem zweiten Sidecar-Container unter Verwendung des Adresskandidaten kommuniziert wird (630).

2. Verfahren nach Anspruch 1, wobei das Kommunizieren des Adresskandidaten Senden eines ersten Adresskandidaten für den ersten Sidecar-Container an den Master-Orchestrator umfasst,
wobei das Kommunizieren des Verkehrs zwischen dem ersten Anwendungscontainer und dem zweiten Anwendungscontainer Folgendes umfasst:
Empfangen des Verkehrs von dem zweiten Anwendungscontainer durch den ersten Sidecar-Container über den zweiten Sidecar-Container unter Verwendung des ersten Adresskandidaten; und
Bereitstellen des Verkehrs durch den ersten Sidecar-Container an den ersten Anwendungscontainer, optional
wobei der erste Adresskandidat eine öffentliche Adresse des ersten Sidecar-Containers umfasst,
wobei das Senden des ersten Adresskandidaten ferner Bestimmen eines serverreflexiven Kandidaten des ersten Sidecar-Containers durch den ersten Sidecar-Container durch Kommunizieren mit einem Session Traversal of User Datagram Protocol through Network Address Translated-Server, STUN-Server, umfasst, und
wobei das Empfangen des Verkehrs von dem zweiten Anwendungscontainer direktes Empfangen des Verkehrs von dem zweiten Sidecar-Container an dem serverreflexiven Kandidaten des ersten Sidecar-Containers umfasst, und/oder
wobei der erste Adresskandidat einen weitergeleiteten Kandidaten eines Traversal Using Relays around Network Address Translated-Servers, TURN,-Servers, umfasst, und
wobei das Empfangen des Verkehrs von dem zweiten Anwendungscontainer Empfangen des Verkehrs von dem zweiten Sidecar-Container über den TURN-Server in Reaktion auf einen Network Address Translated-Traversierungsfehler, NAT-Traversierungsfehler, umfasst.

3. Verfahren nach einem der Ansprüche 1-2, wobei das Kommunizieren des Adresskandidaten Empfangen eines zweiten Adresskandidaten für den zweiten Sidecar-Container von dem Master-Orchestrator umfasst,
wobei das Kommunizieren des Verkehrs zwischen dem ersten Anwendungscontainer und dem zweiten Anwendungscontainer Senden des Verkehrs von dem ersten Anwendungscontainer an den zweiten Anwendungscontainer durch den ersten Sidecar-Container über den zweiten Sidecar-Container unter Verwendung des zweiten Adresskandidaten umfasst, optional
wobei der zweite Adresskandidat einen serverreflexiven Kandidaten des zweiten Sidecar-Containers umfasst, und
wobei das Senden des Verkehrs an den zweiten Anwendungscontainer direktes Senden des Verkehrs an den serverreflexiven Kandidaten des zweiten Sidecar-Containers umfasst, und/oder
wobei der zweite Adresskandidat einen weitergeleiteten Kandidaten umfasst, der von einem Traversal Using Relays around Network Address Translated-Server, TURN,-Server, zugewiesen wird, und
wobei das Senden des Verkehrs an den zweiten Anwendungscontainer Senden des Verkehrs an den zweiten Sidecar-Container über den TURN-Server in Reaktion auf einen Network Address Translated-Traversierungsfehler, NAT-Traversierungsfehler, umfasst.

4. Verfahren nach einem der Ansprüche 1-3, ferner umfassend:
Empfangen (610) einer Anforderungsnachricht von dem Master-Orchestrator, die Bereitstellung des ersten Anwendungscontainers und Verbinden des ersten Anwendungscontainers mit dem zweiten Anwendungscontainer über den ersten Sidecar-Container anfordert.

5. Verfahren nach Anspruch 4, wobei die Anforderungsnachricht Konfigurationsinformationen umfasst, wobei die Konfigurationsinformationen anzeigen, dass der erste Anwendungscontainer unter Verwendung einer Prozedur zur Herstellung interaktiver Konnektivität, ICE, mit dem zweiten Anwendungscontainer verbunden werden soll, optional
wobei die Konfigurationsinformationen eine Entität des ersten Randknotens anzeigen, der für das Erzeugen von kryptografischem Schlüsselmaterial und zugehörigen Parametern für den Verkehr verantwortlich ist,
wobei das Kommunizieren des Adresskandidaten ferner Senden des kryptografischen Schlüsselmaterials und der zugehörigen Parameter an den Master-Orchestrator umfasst, und
wobei das Kommunizieren des Verkehrs zwischen dem ersten Anwendungscontainer und dem zweiten Anwendungscontainer Kommunizieren des Verkehrs über eine Verbindung umfasst, die basierend auf dem kryptografischen Schlüsselmaterial und den zugehörigen Parametern gesichert ist, und/oder
wobei die Anforderungsnachricht ein kryptografisches Schlüsselmaterial und zugehörige Parameter umfasst, und
wobei das Kommunizieren des Verkehrs zwischen dem ersten Anwendungscontainer und dem zweiten Anwendungscontainer Kommunizieren des Verkehrs über eine Verbindung umfasst, die basierend auf dem kryptografischen Schlüsselmaterial und den zugehörigen Parametern gesichert ist.

6. Verfahren zum Betreiben eines Kommunikationsnetzwerks, das unter Verwendung von Kubernetes und einem Interactive Connectivity Establishment-Protokoll, ICE-Protokoll, für Network Address Translate-Traversierung, NAT-Traversierung, implementiert wird und das einen Master-Orchestrator (210, 400), einen ersten Randknoten (222a, 500) und einen zweiten Randknoten (222b, 500) umfasst, wobei das Verfahren Folgendes umfasst:
Durchführen der Schritte nach einem der Ansprüche 1 bis 5 durch den ersten Randknoten und Durchführen der folgenden Schritte durch den Master-Orchestrator:
Empfangen (730) eines ersten Adresskandidaten für einen ersten Sidecar-Container von dem ersten Randknoten;
Empfangen (740) eines zweiten Adresskandidaten für einen zweiten Sidecar-Container von dem zweiten Randknoten;
in Reaktion auf das Empfangen des ersten Adresskandidaten Senden (750) des ersten Adresskandidaten an den zweiten Randknoten; und
in Reaktion auf das Empfangen des zweiten Adresskandidaten Senden (760) des zweiten Adresskandidaten an den ersten Randknoten.

7. Verfahren nach Anspruch 6, ferner umfassend Durchführen der folgenden Schritte durch den Master-Orchestrator:
Senden (710) einer ersten Anforderungsnachricht an den ersten Randknoten, wobei die erste Anforderungsnachricht Bereitstellung eines ersten Anwendungscontainers durch den ersten Randknoten anfordert; und
Senden (720) einer zweiten Anforderungsnachricht an den zweiten Randknoten, wobei die zweite Anforderungsnachricht Bereitstellung eines zweiten Anwendungscontainers durch den zweiten Randknoten anfordert, wobei die erste Anforderungsnachricht und die zweite Anforderungsnachricht ferner anfordern, dass der erste Anwendungscontainer und der zweite Anwendungscontainer verbunden werden sollen.

8. Verfahren nach Anspruch 7, wobei die erste Anforderungsnachricht und die zweite Anforderungsnachricht jeweils Konfigurationsinformationen umfassen, wobei die Konfigurationsinformationen anzeigen, dass der ersten Anwendungscontainer und der zweite Anwendungscontainer über den ersten Sidecar-Container und den zweiten Sidecar-Container unter Verwendung einer Prozedur zur Herstellung interaktiver Konnektivität, ICE, verbunden werden sollen, optional
wobei die Konfigurationsinformationen einen Container jedes Randknotens anzeigen, der für das Erzeugen eines kryptografischen Schlüsselmaterials und zugehöriger Parameter für Verkehr zwischen dem ersten Anwendungscontainer und dem zweiten Anwendungscontainer verantwortlich ist,
wobei das Empfangen des ersten Adresskandidaten Empfangen eines ersten kryptografischen Schlüssels umfasst,
wobei das Empfangen des zweiten Adresskandidaten Empfangen eines zweiten kryptografischen Schlüssels umfasst,
wobei das Senden des ersten Adresskandidaten Senden des ersten kryptografischen Schlüssels an den zweiten Randknoten umfasst, und
wobei das Senden des zweiten Adresskandidaten Senden des zweien kryptografischen Schlüssels an den ersten Randknoten umfasst, und/oder
wobei die erste Anforderungsnachricht und die zweite Anforderungsnachricht jeweils ein kryptografisches Schlüsselmaterial und zugehörige Parameter umfassen.

9. Verfahren nach einem der Ansprüche 6-8, wobei der erste Adresskandidat eine öffentliche Adresse des ersten Sidecar-Containers umfasst, und optional
wobei der erste Adresskandidat ferner eine Adresse eines Traversal Using Relays around Network Address Translated-Servers, TURN,-Servers, umfasst.

10. Erster Randknoten (222a, 500) in einem Kommunikationsnetzwerk, das unter Verwendung von Kubernetes und einem Interactive Connectivity Establishment-Protokoll, ICE-Protokoll, für Network Address Translate-Traversierung, NAT-Traversierung, implementiert wird und das einen Master-Orchestrator (210, 400) und einen zweiten Randknoten (222b, 500) umfasst, wobei der erste ERandknoten Folgendes umfasst:
Verarbeitungsschaltungsanordnung (503); und
Speicher (505), der mit der Verarbeitungsschaltungsanordnung gekoppelt ist, wobei der Speicher Anweisungen umfasst, die bei Ausführung durch die Verarbeitungsschaltungsanordnung den Randknoten zum Durchführen von Operationen nach einem der Ansprüche 1-5 veranlassen.

11. Computerprogrammprodukt, umfassend ein nichttransitorisches Speichermedium, das Programmcode umfasst, der von Verarbeitungsschaltungsanordnung (503) eines ersten Randknotens (222a, 500) in einem Kommunikationsnetzwerk ausgeführt werden soll, das unter Verwendung von Kubernetes und einem Interactive Connectivity Establishment-Protokoll, ICE-Protokoll, für Network Address Translate-Traversierung, NAT-Traversierung, implementiert wird und das einen Master-Orchestrator (210, 400) und einen zweiten Randknoten (222b, 500) umfasst, wobei die Ausführung des Programmcodes den ersten Randknoten zum Durchführen von Operationen nach einem der Ansprüche 1-5 veranlasst.

12. Kommunikationsnetzwerk, das unter Verwendung von Kubernetes und einem Interactive Connectivity Establishment-Protokoll, ICE-Protokoll, für Network Address Translate-Traversierung, NAT-Traversierung, implementiert wird und das einen ersten Randknoten (222a, 500) nach Anspruch 10, einen Master-Orchestrator (210, 400) und einen zweiten Randknoten (222b, 500) umfasst, wobei der Master-Orchestrator Folgendes umfasst:
Verarbeitungsschaltungsanordnung (403); und
Speicher (305), der mit der Verarbeitungsschaltungsanordnung gekoppelt ist, wobei der Speicher Anweisungen umfasst, die bei Ausführung durch die Verarbeitungsschaltungsanordnung den Mater-Orchestrator zum Durchführen von Operationen nach einem der Ansprüche 6-9 veranlassen.

## Revendications

1. Procédé de fonctionnement d'un premier nœud périphérique (222a, 500) dans un réseau de communication, mis en œuvre à l'aide de Kubernetes et d'un protocole d'établissement de connectivité interactive, ICE, pour une traversée de traduction d'adresse de réseau, NAT, qui inclut un orchestrateur maître (210, 400) et un deuxième nœud périphérique (222b, 500), le procédé comprenant :
la communication (620) d'un candidat d'adresse pour soit un premier conteneur sidecar du premier nœud périphérique soit un deuxième conteneur sidecar du deuxième nœud périphérique avec l'orchestrateur maître, dans lequel, en réponse à la communication du candidat d'adresse pour soit le premier conteneur sidecar soit le deuxième conteneur sidecar :
la réalisation d'une procédure d'établissement de connectivité interactive, ICE ; et
l'établissement d'un tunnel sécurisé entre le premier conteneur sidecar et le deuxième conteneur sidecar selon un manifeste d'application, le manifeste d'application définissant un protocole de sécurité à utiliser et des paramètres pertinents pour le protocole, en réponse à la communication du candidat d'adresse pour soit le premier conteneur sidecar soit le deuxième conteneur sidecar ; et
la communication (630) d'un trafic entre un premier conteneur d'application du premier nœud périphérique et un deuxième conteneur d'application du deuxième nœud périphérique via une connexion entre le premier conteneur sidecar et le deuxième conteneur sidecar à l'aide du candidat d'adresse.

2. Procédé selon la revendication 1, dans lequel la communication du candidat d'adresse comprend la transmission d'un premier candidat d'adresse pour le premier conteneur sidecar à l'orchestrateur maître, dans lequel la communication du trafic entre le premier conteneur d'application et le deuxième conteneur d'application comprend :
la réception, par le premier conteneur sidecar, du trafic depuis le deuxième conteneur d'application via le deuxième conteneur sidecar à l'aide du premier candidat d'adresse ; et
la fourniture, par le premier conteneur sidecar, du trafic au premier conteneur d'application, facultativement
dans lequel le premier candidat d'adresse comprend une adresse publique du premier conteneur sidecar,
dans lequel la transmission du premier candidat d'adresse comprend en outre la détermination, par le premier conteneur sidecar, d'un candidat réflexif de serveur du premier conteneur sidecar par communication avec un serveur Session Traversal of User Datagram Protocol through Network Address Translated, STUN, et dans lequel la réception du trafic depuis le deuxième conteneur d'application comprend la réception du trafic directement depuis le deuxième conteneur sidecar au niveau du candidat réflexif de serveur du premier conteneur sidecar, et/ou
dans lequel le premier candidat d'adresse comprend un candidat relayé d'un serveur Traversal Using Relays around Network Address Translated, TURN, et
dans lequel la réception du trafic depuis le deuxième conteneur d'application comprend, en réponse à un échec de traversée d'adresse de réseau traduite, NAT, la réception du trafic depuis le deuxième conteneur sidecar via le serveur TURN.

3. Procédé selon l'une quelconque des revendications 1 et 2, dans lequel la communication du candidat d'adresse comprend la réception d'un deuxième candidat d'adresse pour le deuxième conteneur sidecar depuis l'orchestrateur maître,
dans lequel la communication du trafic entre le premier conteneur d'application et le deuxième conteneur d'application comprend la transmission, par le premier conteneur sidecar, du trafic depuis le premier conteneur d'application au deuxième conteneur d'application via le deuxième conteneur sidecar à l'aide du deuxième candidat d'adresse, facultativement dans lequel le deuxième candidat d'adresse comprend un candidat réflexif de serveur du deuxième conteneur sidecar, et
dans lequel la transmission du trafic au deuxième conteneur d'application comprend la transmission du trafic directement au candidat réflexif de serveur du deuxième conteneur sidecar, et/ou
dans lequel le deuxième candidat d'adresse comprend un candidat relayé alloué par un serveur Traversal Using Relays around Network Address Translated, TURN, et dans lequel la transmission du trafic au deuxième conteneur d'application comprend, en réponse à un échec de traversée d'adresse de réseau traduite, NAT, la transmission du trafic au deuxième conteneur sidecar via le serveur TURN.

4. Procédé selon l'une quelconque des revendications 1 à 3, comprenant en outre :
la réception (610) d'un message de demande depuis l'orchestrateur maître demandant un déploiement du premier conteneur d'application et pour connecter le premier conteneur d'application au deuxième conteneur d'application via le premier conteneur sidecar.

5. Procédé selon la revendication 4, dans lequel le message de demande comprend des informations de configuration, les informations de configuration indiquant que le premier conteneur d'application soit connecté au deuxième conteneur d'application à l'aide d'une procédure d'établissement de connectivité interactive, ICE, facultativement
dans lequel les informations de configuration indiquent une entité du premier nœud périphérique responsable de la génération de données de clé de chiffrement et de paramètres associés pour le trafic,
dans lequel la communication du candidat d'adresse comprend en outre la transmission des données de clé de chiffrement et des paramètres associés à l'orchestrateur maître, et
dans lequel la communication du trafic entre le premier conteneur d'application et le deuxième conteneur d'application comprend la communication du trafic sur une connexion sécurisée sur la base des données de clé de chiffrement et des paramètres associés, et/ou dans lequel le message de demande comprend des données de clé de chiffrement et des paramètres associés, et dans lequel la communication du trafic entre le premier conteneur d'application et le deuxième conteneur d'application comprend la communication du trafic sur une connexion sécurisée sur la base des données de clé de chiffrement et des paramètres associés.

6. Procédé de fonctionnement d'un réseau de communication, mis en œuvre à l'aide de Kubernetes et d'un protocole d'établissement de connectivité interactive, ICE, pour une traversée de traduction d'adresse de réseau, NAT, qui inclut un orchestrateur maître (210, 400), un premier nœud périphérique (222a, 500) et un deuxième nœud périphérique (222b, 500), le procédé comprenant : la réalisation, par le premier nœud périphérique, des étapes selon l'une quelconque des revendications 1 à 5 et la réalisation, par l'orchestrateur maître, des étapes suivantes :
la réception (730) d'un premier candidat d'adresse pour un premier conteneur sidecar depuis le premier nœud périphérique ;
la réception (740) d'un deuxième candidat d'adresse pour un deuxième conteneur sidecar depuis le deuxième nœud périphérique ;
en réponse à la réception du premier candidat d'adresse, la transmission (750) du premier candidat d'adresse au deuxième nœud périphérique ; et
en réponse à la réception du deuxième candidat d'adresse, la transmission (760) du deuxième candidat d'adresse au premier nœud périphérique.

7. Procédé selon la revendication 6, comprenant en outre la réalisation, par l'orchestrateur maître, des étapes suivantes :
la transmission (710) d'un premier message de demande au premier nœud périphérique, le premier message de demande demandant un déploiement d'un premier conteneur d'application par le premier nœud périphérique ; et
la transmission (720) d'un deuxième message de demande au deuxième nœud périphérique, le deuxième message de demande demandant un déploiement d'un deuxième conteneur d'application par le deuxième nœud périphérique, le premier message de demande et le deuxième message de demande demandant en outre que le premier conteneur d'application et le deuxième conteneur d'application soient connectés.

8. Procédé selon la revendication 7, dans lequel le premier message de demande et le deuxième message de demande comprennent chacun des informations de configuration, les informations de configuration indiquant que le premier conteneur d'application et le deuxième conteneur d'application soient connectés via le premier conteneur sidecar et le deuxième conteneur sidecar à l'aide d'une procédure d'établissement de connectivité interactive, ICE, facultativement dans lequel les informations de configuration indiquent un conteneur de chaque nœud périphérique responsable de la génération de données de clé de chiffrement et de paramètres associés pour un trafic entre le premier conteneur d'application et le deuxième conteneur d'application,
dans lequel la réception du premier candidat d'adresse comprend la réception d'une première clé de chiffrement,
dans lequel la réception du deuxième candidat d'adresse comprend la réception d'une deuxième clé de chiffrement,
dans lequel la transmission du premier candidat d'adresse comprend la transmission de la première clé de chiffrement au deuxième nœud périphérique, et
dans lequel la transmission du deuxième candidat d'adresse comprend la transmission de la deuxième clé de chiffrement au premier nœud périphérique, et/ou dans lequel le premier message de demande et le deuxième message de demande comprennent chacun des données de clé de chiffrement et des paramètres associés.

9. Procédé selon l'une quelconque des revendications 6 à 8, dans lequel le premier candidat d'adresse comprend une adresse publique du premier conteneur sidecar, et facultativement
dans lequel le premier candidat d'adresse comprend en outre une adresse d'un serveur Traversal Using Relays around Network Address Translated, TURN.

10. Premier nœud périphérique (222a, 500) dans un réseau de communication mis en œuvre à l'aide de Kubernetes et d'un protocole d'établissement de connectivité interactive, ICE, pour une traversée de traduction d'adresse de réseau, NAT, qui inclut un orchestrateur maître (210, 400) et un deuxième nœud périphérique (222b, 500), le premier nœud périphérique comprenant :
une circuiterie de traitement (503) ; et
une mémoire (505) couplée à la circuiterie de traitement, dans lequel la mémoire inclut des instructions qui, lorsqu'elles sont exécutées par la circuiterie de traitement, amènent le premier nœud périphérique à réaliser des opérations selon l'une quelconque des revendications 1 à 5.

11. Produit de programme informatique comprenant un support de stockage non transitoire incluant un code de programme à exécuter par une circuiterie de traitement (503) d'un premier nœud périphérique (222a, 500) dans un réseau de communication mis en œuvre à l'aide de Kubernetes et d'un protocole d'établissement de connectivité interactive, ICE, pour une traversée de traduction d'adresse de réseau, NAT, qui inclut un orchestrateur maître (210, 400) et un deuxième nœud périphérique (222b, 500), selon lequel une exécution du code de programme amène le premier nœud périphérique à réaliser des opérations selon l'une quelconque des revendications 1 à 5.

12. Réseau de communication mis en œuvre à l'aide de Kubernetes et d'un protocole d'établissement de connectivité interactive, ICE, pour une traversée de traduction d'adresse de réseau, NAT, qui inclut un premier nœud périphérique (222a, 500) selon la revendication 10, un orchestrateur maître (210, 400) et un deuxième nœud périphérique (222b, 500), l'orchestrateur maître comprenant :
une circuiterie de traitement (403) ; et
une mémoire (305) couplée à la circuiterie de traitement, dans lequel la mémoire inclut des instructions qui, lorsqu'elles sont exécutées par la circuiterie de traitement, amènent l'orchestrateur maître à réaliser des opérations selon l'une quelconque des revendications 6 à 9.
